(19) Europäisches Patentamt / European Patent Office / Office européen des brevets

(11) **EP 4 321 027 A1**

(12) **EUROPEAN PATENT APPLICATION**
published in accordance with Art. 153(4) EPC

(43) Date of publication:
**14.02.2024 Bulletin 2024/07**

(21) Application number: **22784713.4**

(22) Date of filing: **07.04.2022**

(51) International Patent Classification (IPC):
*A21D 6/00* (2006.01)    *A21D 13/06* (2017.01)
*A21D 2/36* (2006.01)    *A23G 1/30* (2006.01)

(52) Cooperative Patent Classification (CPC):
**A21D 2/36; A21D 6/00; A21D 13/06; A23G 1/30**

(86) International application number:
**PCT/JP2022/017292**

(87) International publication number:
**WO 2022/215731 (13.10.2022 Gazette 2022/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.04.2021   JP 2021065533**

(71) Applicant: **MEIJI CO., LTD**
**Chuo-ku**
**Tokyo 104-8306 (JP)**

(72) Inventors:
• **NISHIYAMA Yuri**
  **Hachioji-shi, Tokyo 192-0919 (JP)**
• **MATSUDA Koki**
  **Hachioji-shi, Tokyo 192-0919 (JP)**
• **MIYA Fumito**
  **Hachioji-shi, Tokyo 192-0919 (JP)**
• **UTSUNOMIYA Hiroyuki**
  **Hachioji-shi, Tokyo 192-0919 (JP)**
• **HIGAKI Kaoru**
  **Tokyo 104-8306 (JP)**

(74) Representative: **TBK**
**Bavariaring 4-6**
**80336 München (DE)**

(54) **CEREAL FLOUR PUFFED FOOD CONTAINING CACAO COMPOSITION**

(57)    A puffed grain flour food with high polyphenol content showing unsuppressed puffing is provided. A puffed grain flour food containing any of the following cacao compositions (a) to (d): (a) a cacao composition having a particle size distribution in the range of 10 $\mu$m to 1.5 mm and containing undisrupted cacao bean cells, (b) a cacao composition having a free fat content of 60% by weight or lower based on oil content, (c) a cacao composition containing 30% or more of undisrupted cacao bean cells in cacao bean cells, and (d) a cacao composition containing undisrupted cacao bean cells, which has a breaking strength of 3 kgf or lower.

EP 4 321 027 A1

**Description**

Technical Field

The present invention relates to a puffed grain flour food containing a cacao composition.

Background Art

When it is intended to produce a food containing a sufficient amount of polyphenols, which are expected to have various health benefits, it is common practice to combine a large amount of materials having a high polyphenol content. In such cases, other ingredients contained in the materials may exhibit undesirable effects on the objective food, and various efforts are being made to prevent this.

For example, Patent document 1 relates to a bread produced by adding a refined catechin-containing plant extract so that 0.2 to 0.5 parts by weight of catechins are contained in 100 parts by weight of grain flours, and baking the bread from the flour, wherein ratio of catechin content measured by high-performance liquid chromatography to tannin content measured by iron tartrate method in the refined catechin-containing plant extract is 0.81 to 1.10. This reference describes that even when catechins are added in such a physiologically favorable amount of 0.2 parts by weight or larger to 100 parts by weight of grain flours mainly consisting of wheat flour, breads with good texture, brightness, volume and flavor can be provided by using an agent of a specific catechin/tannin weight ratio. Patent document 2 relates to a method for producing catechin-dispersed fat or oil characterized by adding hexane-soluble content and catechins derived from green tea to fat or oil, heating them to 70 to 130°C, and grinding them. This reference describes that white breads were produced by using this catechin-dispersed fat or oil (Example 5), and also describes that, although it is generally known that use of liquid oil or fat suppresses puffing of white bread, use of catechin-dispersed fat or oil has less adverse effect on the puffing of bread.

Patent document 3 relates to a food for prevention of diabetic complications, characterized by containing antioxidants extracted from cacao beans using ethanol. This reference describes production of breads containing 1% of 80% ethanol extract, which was the crude polyphenol fraction of cacao mass (Production Example 2). Patent document 4 relates to a food or drink for preventing hypercholesterolemia containing 0.01 to 5% of cacao polyphenols extracted from cacao raw materials using hot water, aqueous ethanol or ethanol. This reference describes breads and cookies containing powdered solids containing polyphenols (Examples 3 and 5), and describes that the breads were comparable to ordinary breads, had soft chewiness, and showed no taste problems such as bitterness and no coloring problems, and the cookies were also comparable to commercial cookies. Further, Patent document 5 relates to a low-fat cacao extract containing a high concentration of cacao flavor and/or flavor precursor substance and a high concentration of cacao antioxidant compounds. This reference describes preparation of pizza toast containing an extract obtained from low-fermented beans of Theobroma cacao, Trinitario ICS-95 as a source of these cacao antioxidant compounds (Example 7). Further, Patent document 6 relates to a method for producing a baked food containing at least one kind of cocoa-containing material, which comprises adding at least one kind of cocoa-containing material to other materials, then mixing them with maintaining pH of the batter to be below 6.8, and baking the mixed materials to obtain a baked food having a pH of 7.5 or lower. This reference describes a chocolate cake using baking soda or baking powder as an example of such a baked food.

By the way, cacao beans, the raw material of chocolate, are rich in polyphenols. Cacao mass and cocoa powder are well known as conventional processed products of cacao beans, and several other products have also been studied. For example, Patent document 7 proposes a method for treating cacao nibs used as a raw material of chocolate and cocoa powder, which comprises stewing cacao nibs, adding an appropriate amount of enzyme to the nibs, allowing reaction at 30 to 60°C with water, then drying the nibs, and roasting the nibs, as a method that can improve crispiness of cacao nibs, remove bad odor of nibs, and shorten the conching time in chocolate production. This reference describes that the nibs obtained as described above can be used not only for chocolate, but also for other confectioneries such as candies, caramels, cakes, and biscuits, and can be used as a raw material for a wide range of confectioneries. Patent document 8 proposes, as a method for processing beans for beverage (beverage beans) such as cacao beans and coffee beans into a new food that can be directly ingested, a method for producing seasoned beverage beans comprising soaking beverage beans in water or a dilute salt solution, taking out the beans, soaking them in a seasoning solution for such a time that the seasoning solution is absorbed by the beverage beans, taking out and drying the beans. It is explained that, in this method, the pretreatment of soaking the beans in water or dilute salt solution before soaking them in the seasoning solution reduces bitterness commonly associated with beverage beans, and seasoned beans with a sweet and soft texture can be obtained, and such seasoned beans can be directly ingested. Further, Patent document 9 proposes a treatment of non-fermented and non-roasted raw cacao beans with a process consisting of a combination of stewing with water vapor and drying as a method for obtaining cacao beans with reduced polyphenol oxidase activity and high polyphenol content. It is explained in this reference that the total polyphenol content in the cacao beans obtained after stewing is in the range of 0 to 30 g per 100 g of the cacao beans, and the low molecular weight polyphenol content of the same is 0 to 20 g per 100 g of the cacao beans. It also explains that cacao liquor, cocoa powder, or extract with high polyphenol content can be produced from the obtained cacao beans, and that products derived from such cacao beans can be used for confectionery products, chocolate, and products containing cacao.

Further, as for bean paste not containing sugar obtained by boiling, grinding, and weight-dehydrating adzuki beans, kidney beans, peanuts beans or soybeans, and kneaded bean paste produced by adding bean paste not containing sugar to a sugar solution and kneading them, presence of starch, shape and texture characteristics of bean paste particles, and so forth have been reported (Non-patent document 1). In this report, the bean paste was also produced by using kidney beans, peanuts beans, and soybeans, which are not normally used as a raw material of usual bean paste, in addition to adzuki beans, but use of cacao beans is not mentioned. In general, it is believed that beans with a high starch content are suitable for bean paste, and cacao beans have a lower starch content and a higher oil content compared with any of adzuki beans, kidney beans, peanuts beans, and soybeans. Therefore, cacao beans are generally processed by grinding them in their dry state after roasting so that they come to have characteristic aroma and physical properties.

Prior Art References

Patent documents

Patent document 1: Japanese Patent Unexamined Publication (Kokai) No. 2008-200032
Patent document 2: Japanese Patent Unexamined Publication (Kokai) No. 2010-041965
Patent document 3: Japanese Patent Unexamined Publication (Kokai) No. Hei 09-234018
Patent document 4: Japanese Patent Unexamined Publication (Kokai) No. Hei 11-308978
Patent document 5: International Publication WO2003/077668 (Japanese Patent Unexamined Publication (Kohyo) No. 2005-520505)
Patent document 6: U.S. Patent Publication US2007/0184167 A1
Patent document 7: Japanese Patent Unexamined Publication (Kokai) No. Sho 48-068777
Patent document 8: Japanese Patent Unexamined Publication (Kokai) No. Hei 10-033119
Patent document 9: U.S. Patent No. 8,048,469
Patent document 10: International Publication WO2021/066119 (PCT/JP2020/037486) (published after the priority date of the present application)

Non-patent document

Non-patent document 1: Journal of the Japanese Society of Home Economics, Vol. 50, No. 4, pp323-332, 1999

Summary of the Invention

Object to be achieved by the invention

When manufacturing puffed grain flour foods such as bread, of which volume is increased by heating, if a large amount of conventional cacao mass or cocoa powder is added in order to increase the polyphenol content, puffing is suppressed, and the appearance of the products is spoiled. It is considered that this suppression of puffing is caused because if cacao mass and cocoa powder is used, oil seeps out of it. Therefore, a material that does not show oil seepage is desired. The inventors of the present invention have studied food materials made from cacao beans and showing less oil seepage (Patent document 10).

The present invention provides the followings.

[1] A puffed grain flour food containing any of the following cacao compositions (a) to (d):

(a) a cacao composition having a particle size distribution in the range of 10 $\mu$m to 1.5 mm and containing undisrupted cacao bean cells,
(b) a cacao composition having a free fat content of 60% by weight or lower based on oil content,
(c) a cacao composition containing 30% or more of undisrupted cacao bean cells in cacao bean cells, and
(d) a cacao composition containing undisrupted cacao bean cells, which has a breaking strength of 3 kgf or lower.

[2] The food according to 1, which has a polyphenol content of 0.01% by weight or higher.

[3] The food according to 1 or 2, which has a polyphenol content of 0.2% by weight or higher.

[4] The food according to any one of 1 to 3, which has a procyanidin content of 0.02% by weight or higher.

[5] The food according to any one of 1 to 4, wherein mixing amount of the cacao composition in raw materials is 1 to 30% by weight.

[6] The food according to any one of 1 to 5, which contains at least one of yeast and a puffing agent.

[7] The food according to any one of 1 to 6, which is a bread product.

Effect of the Invention

By blending a composition containing undisrupted cacao bean cells in dough for puffed grain flour food before baking of a puffed grain flour food, a polyphenol-rich, well-puffed, and low-bitter flavored puffed food can be obtained.

Brief Description of Drawings

[Fig. 1] Photographs of breads containing a polyphenol-containing material.

[Fig. 2] List of analysis results of breads containing a polyphenol-containing material.

[Fig. 3] List of analysis results of breads containing a polyphenol-containing material.

[Fig. 4] Photographs of breads containing a polyphenol-containing material: A, control; and B, containing a polyphenol-containing material

[Fig. 5] Microphotographs of cacao bean processed products: (a) unfermented non-heated cacao beans, (b) heating-treated cacao beans, (c) cacao composition, and (d) cacao mass.

[Fig. 6] Confocal microphotographs of cacao bean processed products: (a) dried cacao beans (unfermented), (b) cacao composition, and (c) cacao mass.

[Fig. 7] Particle size distributions: a) cacao composition produced by using a 60 mesh sieve, and b) cacao mass.

[Fig. 8] Photographs of products taken in an amount of approximately 2 g in a micro tube and centrifuged (16,000 rpm, 10 minutes): a) cacao composition, b) left: cacao mass, and right: commercial milk chocolate.

[Fig. 9] Results of breaking strength measurement: A, unfermented dried cacao beans; B, unfermented roasted cacao beans; C., unfermented, boiled (1 hour) and dried cacao beans; and D, unfermented, boiled (2 hours) and dried cacao beans.

Modes for Carrying out the Invention

The present invention relates to a puffed grain flour food containing any of the following cacao compositions (a) to (d):

(a) a cacao composition having a particle size distribution in the range of 10 μm to 1.5 mm and containing undisrupted cacao bean cells,

(b) a cacao composition having a free fat content of 60% by weight or lower based on oil content.

(c) a cacao composition containing 30% or more of undisrupted cacao bean cells in cacao bean cells, and

(d) a cacao composition containing undisrupted cacao bean cells, which has a breaking strength of 3 kgf or lower.

When amounts of ingredients or materials contained in a food is expressed in terms of ratio (% or part) for the present invention, they are expressed on weight (mass) basis, unless otherwise stated.

<Puffed grain flour food>

For the present invention, the term puffed grain flour food refers to a food of which raw materials include grain flour, preferably so that the ratio of the grain flour to the raw materials excluding water is 50% or higher, which has been puffed by means of a puffing means. The puffing means includes yeast, air inflation, water vapor, and a puffing agent. Yeast can inflate dough with carbon dioxide generated by fermentation. Air inflation can be achieved by, for example, heating dough aerated by whipping or creaming of material such as eggs. Water vapor is generated by, for example, heating water contained in the dough. An example of the puffing agent is baking powder. Puffing agents usually contain sodium hydrogencarbonate (baking soda), which can expand the dough by generating carbon dioxide. In the following explanation, puffed grain flour food may be referred to simply as puffed food.

The present invention is particularly suitably applied to foods in which gluten formation is involved in the puffing, among puffed grain flour foods. Examples of the puffed grain flour foods in which gluten formation is involved include breads. When cocoa powder is added, cocoa powder can reduce gluten formation. Since gluten is formed when wheat proteins (glutenin and gliadin) absorb water and link together, there is a concern that the water absorbency of cocoa powder may deprive of moisture necessary for gluten formation. By blending the cacao composition instead of conventional cocoa powder, this problem can be solved. The present invention is also particularly suitably applied to puffed grain flour foods having a moisture content of 10% or higher. The moisture content of the puffed grain flour food can be measured by methods conventionally used in the food industry, such as the atmospheric pressure heat drying method, reduced pressure heat drying method, Karl Fischer method, and distillation method.

<Cacao composition>

(Major characteristics)

The cacao composition used in the puffed grain flour food is a material processed from cacao beans as a raw material and has the following characteristics:

  1) containing undisrupted cacao bean cells, and
  2) having a particle size distribution of 10 $\mu$m to 1.5 mm.

In some aspects, it may have the following characteristic:
3) having a weight ratio of free-fat content of 60% or lower based on oil content. Concerning the present invention, proportions or ratios of ingredients contained in a composition or the like are based on weight, unless especially stated.
In some aspects, it may have the following characteristic:
4) a ratio of number of undisrupted cells of 30% or higher in the cacao bean cells.
In some aspects, it may have the following characteristics:

  1) containing undisrupted cacao bean cells, and
  5) having a breaking strength of 3 kgf or lower.

The cacao composition does not include whole non-heated cacao beans. Examples of whole non-heated cacao beans include natural cacao beans themselves and fermented cacao beans themselves. Further, the cacao composition does not include existing cacao nibs. Cacao nibs correspond to cacao beans from which the shells have been removed, which have not been heated in the presence of moisture. However, cacao nibs include those that have been subjected to a heating pasteurization and/or roasting commonly used in usual chocolate and cacao production. The cacao nibs also include a grinding product of those mentioned above.
One of the characteristics of the cacao composition is that it is heated in the presence of moisture (subjected to wet heating). The presence or absence of moisture during the heating treatment of cacao beans can affect the ingredients and composition of the treated cacao beans. Examples of the wet heating include boiling, steaming, stewing, and microwave heating in the presence of moisture. The term "wet heating" does not include heating for the purpose of sterilization or roasting. The temperature and time for the wet heating preferably constitute such conditions that the contained polyphenol oxidase can be inactivated to a certain extent, and the product is softened so that the breaking strength thereof is within a certain range, as described later.
Implementations of not only a cacao bean processed product that has been heated in the presence of moisture and ground so as to leave a relatively large number of undisrupted cells (wet-heated and ground products) and dried products thereof (wet-heated, ground and dried products), but also wet-heated cacao beans (wet-heated beans) and dried products thereof (wet-heated and dried beans) for such grinding, ground products of wet-heated and dried beans (wet-heated, dried and ground products), and dried products of cacao beans (dried beans) for wet heating and grinding all may be direct or indirect implementation of the cacao composition.
One of the characteristics of the cacao composition is that it has a special particle size distribution, and conventional cacao bean processed products and the cacao composition can be mentioned in the order of from smaller to larger particle size as follows: cacao mass and cacao liquor, the cacao composition, cacao nibs, and whole beans. Common cacao mass has such a particle size distribution that 98% or more of the particles are in the range of 0.5 to 100 $\mu$m, and shows a single peak, which peak is in the range of 5 to 20 $\mu$m. The particle size of cacao nibs depends on the degree of grinding, but usually in such a range that the particles are visible, and hardly pass through a sieve with a mesh opening of 1 mm.

(Raw material cacao beans)

The term cacao bean refers to a seed of cacao (*Theobroma cacao*), and the variety and production region of the cacao beans used as the raw material for the cacao composition are not particularly limited. Examples of cacao varieties include Forastero, Criollo, Trinitario varieties, derivatives and hybrids thereof. Examples of the regions of production include Ghana, Cote d'Ivoire, Nigeria, Brazil, Venezuela, and Trinidad and Tobago.

In general, cacao beans used as a raw material for chocolate are extracted from cacao pods (cacao nuts) together with pulp, fermented, and dried. However, the raw material cacao beans used for the cacao bean processed products of the present invention are not particularly limited concerning use or non-use, or degree of processing so long as they contain undisrupted cacao bean cells. Examples of the processing of cacao beans include fermentation, removal of pulp, drying, roasting, and enzyme deactivation treatment.

From the viewpoint of obtaining a composition having a high polyphenol content, it is preferred that the raw material cacao beans have not undergone a process in which polyphenols are reduced. Polyphenols are reduced by the actions of enzymes promoted under the fermentation conditions and high temperatures. Therefore, it is preferred that the raw material cacao beans preferably used in the present invention have not been fully fermented and have not been roasted. The expression of fully fermented means that the cacao beans have been fermented for 7 days or longer after harvesting.

From the viewpoint of obtaining a composition having a vivid color tone, it is preferred that the raw material cacao beans are fresh cacao beans immediately after extraction from the cacao pods or such fresh cacao beans from which the pulp has been immediately removed. It is also preferred that such fresh cacao beans are immediately treated to inactivate enzymes contained in the cacao beans, such as polyphenol oxidase. This is because the remaining polyphenol oxidase activity contained in the cacao beans acts on the polyphenols of the cacao beans and changes the color to a dark brown tone.

From the viewpoint of obtaining a composition having a low free fat content, it is preferred that the raw material cacao beans are whole beans. This is because, depending on the degree of grinding, the cacao bean cells are disrupted, and the oil or fat contained in the cells is released.

(Form and particle size distribution of the cacao composition)

The cacao composition can be said to be a ground product of cacao beans. The size obtained by grinding of cacao beans is not limited so long as the resulting composition contains undisrupted cacao bean cells as described later. Cacao bean cells vary in size, but the smallest diameter is about 10 $\mu$m, and therefore the cacao composition may contain particles of about 10 $\mu$m or larger. The aforementioned particles refer to cacao bean cells themselves, or aggregates of cacao bean cells. The aforementioned aggregates of cacao bean cells include cacao bean cells that are not separated and remain in a state of a tissue of adhered cells, as well as cacao bean cells that are once separated and then aggregated. The particle size distribution of the cacao composition is, for example, 10 $\mu$m to 1.5 mm, preferably 10 $\mu$m to 1.2 mm, more preferably 10 $\mu$m to 1 mm.

Concerning the present invention, the particle size distribution refers to the degree of distribution of the sizes of particles contained in an objective composition, unless especially stated. Also concerning the present invention, the expression that the particle size distribution of the composition is within a specific range means that particle sizes of 70% or more, preferably 80% or more, more preferably 90% or more, still more preferably 95% or more, even more preferably 98% or more, of particles are in the specific range as determined by laser diffraction particle size distribution measurement, unless especially stated. The % value used here is a value based on volume (relative particle volume).

The median diameter of the particles contained in the cacao composition is between 200 and 400 $\mu$m, preferably 240 to 380 $\mu$m, more preferably 280 to 360 $\mu$m, still more preferably 300 to 340 $\mu$m. The mode diameter is 280 to 480 $\mu$m, preferably 310 to 460 $\mu$m, more preferably 350 to 430 $\mu$m, even more preferably 370 to 410 $\mu$m. The mean diameter is between 150 and 350 $\mu$m. The relative amount of particles having a particle size in the range of 0.2 mm to 0.7 mm contained in the cacao composition is 5% or larger. The measurement is performed on the volumetric basis by a laser diffraction particle size distribution measurement method.

The means for grinding is not particularly limited, and examples include grinding with a mixer or the like, and straining through a sieve with a mesh opening larger than the size of cacao bean cells.

The cacao composition can also be in the form of a paste or a dried product thereof. In other words, the cacao composition can be a ground product of heating-treated cacao beans. According to one embodiment of the cacao composition, it is a material in a state that it can be easily ground obtained by a method of heating in the presence of moisture, such as boiling, steaming, stewing, and microwave heating. By the heating treatment, polyphenol oxidase contained in the cacao beans has been inactivated. In addition, the heating-treated cacao beans are considered to be in a state that the raw material cacao beans can be separated into cell units. The paste may be in a state that relatively large solids are contained, like bean paste containing whole adzuki beans.

The cacao composition in the form of paste contains 15% or more, preferably 20% or more, more preferably 25% or more, still more preferably 30% or more, of moisture. The maximum moisture content of the cacao composition in the form of paste is not particularly limited so long as it is in the form of paste, and it is, for example, 70% or lower, preferably 60% or lower, more preferably 55% or lower, still more preferably 40% or lower, irrespective of the minimum content. The moisture content of the cacao composition in the form of a dry product, more specifically in the form of powder, is 5% or lower, preferably 4% or lower, more preferably 3.5% or lower, still more preferably 3% or lower. The minimum moisture content of the cacao composition in the form of powder is not particularly limited, and can be, for example, 0%, 0.1% or lower, 0.5% or lower, or 1% or lower, irrespective of the maximum content.

(Containing undisrupted cacao bean cells)

The cacao composition contains undisrupted cacao bean cells. The term "undisrupted" means that the cell membrane has not been disrupted. It can be determined whether or not a subject composition contains such undisrupted cacao bean cells by observing it with a microscope or the like to determine whether or not presence of cells surrounded by cell membranes can be confirmed. If the cacao bean cells are not disrupted, lipids and proteins remain inside the cells. Therefore, whether or not undisrupted cacao bean cells are contained can be determined by staining the proteins and lipids, and observing them to determine whether or not the locations of the proteins and lipids are the same.

A higher ratio of undisrupted cacao bean cells to the cacao bean cells contained in the cacao composition is preferred from the viewpoint of not releasing free fats from the cells, and so forth. The ratio of undisrupted cacao bean cells to cacao bean cells can be calculated from the number of total cells and the number of undisrupted cacao bean cells, which are confirmed in a certain region of a cacao bean processed product by observing it with a microscope. Specifically, the following method is used.

(1) Add 2 ml of water to 0.03 g of a sample, and stir the mixture. Then, add 0.5 ml of a 0.01% methylene blue solution to the mixture, stir the resulting mixture, drop the mixture onto slide glass, place cover glass on it, and observe it with a microscope (magnification, 450 x).

(2) Obtain area size of a region of the sample (A) and the number of disrupted cells (B) in the region from the observed image or an image captured from it, by using image analysis software, if necessary. The number of disrupted cells can be obtained by visually selecting and counting the disrupted cells contained in the region.

(3) Calculate the area size (C) of one undisrupted cell as a circle with a radius of 10 $\mu$m ($10 \times 10 \times 3.14 = 314$ $\mu$m$^2$).

(4) Calculate the total number of cells (D) by dividing the area size (A) by the area size of one undisrupted cell (C).

(5) Calculate the ratio of undisrupted cells in cacao bean cells (%) in accordance with the following equation. At this time, for 5 or more, preferably 10 or more, of regions where the total number of cells (D) is in the range of 100 to 300, the value for each region can be calculated in accordance with the following equation, and the mean of the obtained values may be used as the ratio of undisrupted cells in the cacao bean cells of the sample.

$$\text{Ratio of undisrupted cells in cacao bean cells } (\%) = (D - B)/D \times 100$$

This ratio of the cacao composition is, for example, 30% or higher, preferably 40% or higher, more preferably 50% or higher, still more preferably 60% or higher, still more preferably 70% or higher, still more preferably 80% or higher, still more preferably 90% or higher, most preferably 100%.

Ingredients such as oils, fats and polyphenols of undisrupted cacao bean cells are maintained in the cells, since the cell membranes of the undisrupted cacao bean cells are not disrupted. Cacao mass, which is a common cacao bean processed product, is usually finely ground to a diameter of about 20 $\mu$m or smaller in the production process. Therefore, oils, fats, polyphenols, and so forth are released from the disrupted cacao bean cells and present in the cacao mass. On the other hand, in the cacao composition, the oil or fat content and polyphenols derived from cacao beans are sealed in the cacao bean cells whose cell membranes have not been disrupted, and therefore it has a characteristic that those ingredients hardly seep out.

(Free fat content ratio)

The cacao composition has a low free fat content ratio based on oil content. In the field of chocolate, free fat refers to a fat or oil existing in a free form in a material. The free fat affects the flowability, viscosity, and so forth of chocolate. In addition, it is thought that, from a material containing a lot of free fats, oils tend to easily seep out.

The free fat content ratio based on oil content (also referred to simply as free fat content ratio) referred to for the present invention is represented with a value measured and calculated by the following method, unless especially stated. That is, it means a ratio of free fats (on weight basis) in the oils or fats contained in the subject composition.

Measurement of free fat content

(1) Put about 5 g of a sample (a) into a 50-ml centrifuge tube.
(2) Add 25 ml of n-hexane.
(3) Shake the tube 130 times/minute for 3 minutes with an amplitude of 4 cm.
(4) Centrifuge the mixture at 3000 rpm and 4°C for 10 minutes.
(5) Measure the weight (b) of a 100-ml conical flask
(6) Transfer the supernatant obtained in (4) onto filter paper to filter it, and collect the filtrate in the 100-ml conical flask.
(7) Evaporate n-hexane by blowing nitrogen gas.
(8) Evaporate n-hexane by holding the residue in a vacuum constant temperature dryer at 98°C for 4 hours under reduced pressure.
(9) Measure the weight (c) of the conical flask after air-cooling in a desiccator.

$<x>$ Free fat content ratio in the composition (free fat content ratio based on sample weight) (%) = (c - b)/a x 100

$<y>$ Free fat content ratio based on oil content (%) = $<x>$/oil content in a x 100

$<z>$ Free fat content ratio based on solid content (%) = $<x>$/(a - moisture in a) x 100

The free fat content ratio based on oil content of the cacao composition is, for example, 60% or lower, preferably 50% or lower, more preferably 40% or lower, still more preferably 30% or lower, still more preferably 28% or lower, still more preferably 20% or lower, still more preferably 16% or lower, still more preferably 10% or lower. For particularly low oil seepage and excellent compatibility with aqueous foods, the free fat content ratio based on oil content of the cacao composition is preferably 30% or lower.

The free fat content ratio based on solid content of the cacao composition is, for example, 42% or lower, preferably 30% or lower, more preferably 25% or lower, still more preferably 20% or lower, still more preferably 16% or lower, still more preferably 14 % or lower, still more preferably 8% or lower, still more preferably 5% or lower. For particularly low oil seepage and excellent compatibility with aqueous foods, the free fat content ratio based on solid content of the cacao composition is preferably 16% or lower.

The free fat content ratio in the cacao composition is, for example, 41% or lower, preferably 25% or lower, more preferably 20% or lower, still more preferably 15% or lower, still more preferably 14% or lower, still more preferably 10% or lower, still more preferably 8% or lower, still more preferably 5% or lower. For particularly low oil seepage and excellent compatibility with aqueous foods, the free fat content ratio in the cacao composition is preferably 10% or lower.

The free fat content ratio of unprocessed cacao beans is generally low, but the free fat content of conventional cacao bean processed products is high, because the cells are disrupted during the production processes. On the other hand, in the cacao composition, the oils or fats derived from cacao beans are sealed in the cacao bean cells having undisrupted cell membranes, and therefore the cacao composition has a distinctive characteristic not found in conventional cacao bean processed products, namely, a low free fat content ratio, despite that it contains a reasonably high concentration of oils or fats derived from cacao beans.

(Polyphenol content)

The cacao composition has a high polyphenol content. In addition, the cacao composition has a high procyanidin content. This is because the polyphenol oxidase contained in the cacao beans has been inactivated by the heating treatment.

The minimum polyphenol content of the cacao composition is, for example, 1.0% or higher, more specifically 1.5% or higher, still more specifically 1.8% or higher, preferably 2.0% or higher, more preferably 2.4% or higher, still more preferably 2.8% or higher, still more preferably 3.2% or higher, still more preferably 3.6% or higher, still more preferably 3.8% or higher, still more preferably 4.0% or higher, based on the solid content. The maximum polyphenol content in the cacao composition is, for example, 10% or lower, preferably 8% or lower, more preferably 7.6% or lower, still more preferably 7.2% or lower, still more preferably 6.8% or lower, still more preferably 6.4% or lower, based on solid content, irrespective of the minimum content.

Concerning the present invention, the polyphenol content is represented by a value measured by the Folin-Ciocalteu method and calculated in terms of (-)-epicatechin, unless especially stated. For the method of measuring the polyphenols by the Folin-Ciocalteu method, reference can be made to "Cacao Polyphenol Measurement Method" attached to the "Labeling Standards for Cacao Polyphenols in Chocolates" of the Japan National Chocolate Industry Fair Trade Council. Since the polyphenols contained in the cacao composition are derived from the cacao beans, they may also be referred to as cacao polyphenols. Further, since the polyphenol content of the cacao composition is represented with a value measured as the total amount of various polyphenol compounds, it may be referred to as total polyphenol content, polyphenol total content, or the like.

The cacao composition preferably contains a large amount of procyanidins among the polyphenols. The minimum procyanidin content of the cacao composition is, for example, 0.2% or higher, preferably 0.3% or higher, more preferably 0.5% or higher, still more preferably 0.7% or higher, still more preferably 1.1% or higher, still more preferably 1.3% or higher, still more preferably 1.5 % or higher, still more preferably 1.7 % or higher, based on solid content. The maximum procyanidin content of the cacao composition is, for example, 5% or lower, preferably 4% or lower, more preferably 3.5% or lower, still more preferably 3.0% or lower, still more preferably 2.7% or lower, still more preferably 2.2% or lower, based on solid content, irrespective of the minimum content.

Concerning the present invention, the procyanidin content refers to the amount of catechin, epicatechin, procyanidin B2, procyanidin B5, procyanidin C1, and cinnamtannin A2 measured by HPLC.

(Braking strength)

The cacao composition may be heating-treated in the presence of moisture as described later, and thereby softened so that the breaking strength is in a certain range. The breaking strength of the cacao composition is, for example, 3 kgf or lower, preferably 2.87 kgf or lower, more preferably 2.49 or lower, still more preferably 2.46 or lower, still more preferably 2.28 kgf or lower. The minimum value of the same can be 0.5 kgf or higher, preferably 1.0 kgf or higher, more preferably 1.42 kgf or higher, still more preferably 1.69 kgf or higher, irrespective of the maximum value.

Concerning the present invention, the breaking strength is measured as follows, unless especially stated.

Measure the breaking strength for a sample dried at 100°C for 4 hours or longer under reduced pressure with a rheometer using a cylindrical plunger having a diameter of 3 mm for a penetration depth of 4.0 mm at a penetration speed of 2 cm/minute. The temperature of the sample should be 22 to 24°C. If the obtained measurement value varies, perform the measurement for an appropriate number of samples. Although the appropriate number of samples can be appropriately determined by those skilled in the art, for example, 50 samples may be taken from one composition, and the mean value of the 50 measured values may be used as the breaking strength of the composition.

(Other raw materials)

The cacao composition may contain additives acceptable for foods. Examples of such additives are sweeteners, antioxidants, flavors, acidulants, excipients, surfactants, binders, disintegrants, lubricants, dissolution aids, suspending agents, coating agents, colorants, preservatives, buffers, pH adjusters, emulsifiers, stabilizers, and so forth.

(Method for producing cacao composition)

The cacao composition can be produced by a production method comprising the following steps:

the step of heating-treating raw material cacao beans in the presence of moisture to obtain heating-treated cacao beans, and
the step of grinding the resulting heating-treated cacao beans.

The present invention also provides a production method suitable for obtaining a composition having a low free fat content ratio, which comprises:.

the step of heating-treating raw material cacao beans in the presence of moisture to obtain heating-treated cacao beans, or
the step of processing the raw material cacao beans so that the raw material cacao beans can be easily separated into cell units.

The means for the heating treatment in the production methods of the cacao composition is not particularly limited, so long as it is a means for heating in the presence of moisture, and enables such processing of the raw material cacao beans that the subsequent grinding process can be easily carried out, and the polyphenol oxidase contained in the cacao beans is preferably inactivated. Examples of the means for heating include boiling (also referred to as heating by boiling), steaming, stewing, and microwave heating.

The temperature and time for the heating treatment should preferably correspond to such conditions that the polyphenol oxidase can be inactivated to a certain extent, and the breaking strength of the raw material cacao beans can be made to be the value described above. Examples of such conditions include boiling by heating by boiling in water at 80°C or higher, preferably 90°C or higher, more preferably in seething water, for 10 minutes or longer, preferably 20 minutes or longer, more preferably 30 minutes or longer.

The heating treatment in the presence of moisture provides a high heat conductivity because water is used as a heat medium. It is also thought that the cell walls and/or the adhesive parts between the cell walls of cacao beans can be softened by appropriately controlling the temperature and time of heating.

The means for grinding used in the production method of the cacao composition is not particularly limited, so long as a composition containing undisrupted cacao bean cells can be obtained. The size of the ground material is not limited. The minimum particle size is the size of the cacao bean cell, for example, about 20 μm in diameter.

The means for grinding is not particularly limited, and examples thereof include grinding with a mixer or the like, and straining (mashing) using a sieve having a mesh opening larger than the size of a cacao bean cell. Examples of the device for straining include a sieve of 32 mesh, 60 mesh, or the like made of stainless steel, and so forth. Examples of the equipment for grinding include a kneader widely used for production of bean paste, and so forth.

<Mixing amount of cacao composition>

The cacao composition can be blended in the puffed food as a raw material in such an amount that the effects of the present invention are not impaired, but the mixing amount of the cacao composition in the raw materials is preferably 1 to 30%, more preferably 5 to 25%, still more preferably 8 to 23%. The mixing amount of the cacao composition can also be expressed as an amount relative to the amount of the grain flour. The mixing amount of the cacao composition to 100 parts by weight of the grain flour in the raw materials is preferably 2 to 62 parts by weight, more preferably 10 to 60 parts by weight, still more preferably 20 to 58 parts by weight. If the mixing amount of the cacao composition is smaller than these ranges, it is difficult to say that sufficient amount of polyphenols can be taken to obtain physiological functions thereof when the food is consumed in normal amounts. When the amount is larger than these ranges, it is difficult to obtain a favorable puffed food, because the grain flour content becomes relatively lower.

<Characteristics of puffed grain flour food containing cacao composition>

The puffed grain flour food containing the cacao composition provided by the present invention is well puffed despite being rich in cacao polyphenols. In addition, since it contains cacao polyphenols as a cacao composition containing undisrupted cacao bean cells, it has an advantage of having flavor of cacao while having less bitter taste of polyphenols.

<Cacao polyphenol content>

The polyphenol content and procyanidin content in the blended raw materials can be measured by the methods described above or in the section of Examples. The polyphenol content and procyanidin content in the dough of the puffed food can be calculated by summing up the contents of them in the respective blended raw materials. Since the method for measuring polyphenol content (Folin-Ciocalteu method) is a method for quantifying OH groups, there is a concern that ingredients other than polyphenols may also be measured depending on type of the food. If there is such a concern, a food that does not contain the target material can be produced as a control, and by subtracting the content in such a food as a base to appropriately determine the polyphenol content provided by inclusion of the target material.

The polyphenol content and procyanidin content in the puffed food are contents measured for a sample obtained by pretreating the puffed food to be evaluated to simulate digestion in the human body, unless otherwise stated, and an appropriate control may be provided for the measurement, if necessary. In more detail, the pretreatment simulating digestion in the human body is performed for a target puffed food, then the polyphenol and procyanidin contents are measured by the methods described above or in the section of Examples (measured values A), while the polyphenol and procyanidin contents are similarly measured for a control puffed food (produced in the same manner as that for the puffed food as the measurement object except that the polyphenol-containing material has been replaced with grain flour) that has been subjected to the same pretreatment (measured values B), and the values obtained by subtracting the measured values B from the measured values A are defined as the polyphenol content and procyanidin content in the puffed food. The pretreatment simulating digestion in the human body means treating the target puffed food with artificial gastric juice and artificial intestinal juice. Not only the cacao compositions, cacao raw materials generally easily bind with proteins, and it is difficult to measure polyphenol content and procyanidin content in the bound state. Therefore, it is preferable to perform the pretreatment. The polyphenol content measured after performing the pretreatment is not a theoretical value calculated from the amount contained in the raw material, but is the content of polyphenols and procyanidins obtainable after the treatment simulating digestion in the human body.

The puffed food contains at least 0.01% or more, for example, 0.02% or more, more specifically 0.05% or more, preferably 0.1 % or more, more preferably 0.15% or more, still more preferably 0.2% or more, of cacao polyphenols in terms of polyphenol content. The maximum cacao polyphenol content in the puffed food can be controlled according to the flavor of the puffed food, and the maximum content can be, for example, 10% or lower, preferably 8% or lower, more preferably 7% or lower, still more preferably 6% or lower, in terms of polyphenol content.

The puffed food contains at least 0.005% or more, preferably 0.01% or more, more preferably 0.015% or more, still more preferably 0.02% or more, of procyanidins. The maximum procyanidin content in the puffed food can be controlled according to the flavor of the puffed food, and the maximum content can be, for example, 4% or lower, preferably 3% or lower, more preferably 2% or lower, still more preferably 1% or lower.

Since cacao polyphenols are contained in the form of a cacao composition containing undisrupted cacao bean cells according the present invention, a puffed food having a high cacao polyphenol content can be obtained even if the food has been subjected to a heating step at 100°C or higher during the production.

<Form and raw materials of puffed food>

The puffed food of the present invention can be made in the form of arbitrary food. Examples include breads, doughnuts, sponge cakes, pound cakes, cupcakes, muffins, baumkuchen, madeleines, waffles, scones, macaroons, soufflés, choux, eclairs, steamed breads, and so forth.

Particularly preferred examples of the puffed foods are breads. Breads include: 1) breads made by kneading and fermenting wheat flour or wheat flour and grain flour as the main material, and yeast, or such materials further containing water, salt, fruits such as grapes, vegetables, eggs, processed products thereof, sugars, edible oils or fats, milk, milk products, and so forth (the resultant is henceforth referred to as "bread dough"), and baking the bread dough, and having a moisture content of 10% or higher; 2) breads made by enclosing or folding sweet bean paste, cream, jams, edible oils and fats, etc. with or into the bread dough, or putting them on the bread dough, and baking the bread dough, and having a moisture content of 10% or higher in the baked bread dough; and 3) breads made by filling, sandwiching, or applying sweet bean paste, cakes, jams, chocolate, nuts, sugars, flower pastes, margarines, creamed edible oils and fats etc. into, with, or on the breads mentioned in 1). Examples of breads include white breads, coppepan (hot dog buns), raisin bread, French bread, soft French bread, rolls, croissants, English muffins, and naan bread.

The puffed food can have various shapes and processed in a variety of ways so long as the effects of the present invention are not impaired. For example, the puffed food can be coated (with chocolate, icing, etc.), decorated with powdered sugar or nuts, and contain a solid material such as chocolate, fruits, nuts, etc., or can be made from the dough mixed with another dough that does not contain the cacao composition so as to have a marble-like pattern.

The raw materials of the puffed food include grain flour. The term "grain flour" referred to for the present invention means not only flour of grains, but also starch-based flours such as flours of beans and potatoes. Examples of the grain flour include wheat flour (strong, medium, thin, and French bread flours), rye flour, whole wheat flour, buckwheat flour, rice flour (joshinko, shiratamako, and glutinous rice flour), brown rice flour, foxtail millet flour, Japanese bamyard millet flour, soybean flour, corn flour, cornstarch, potato flour, potato flour, potato starch, sweet potato flour, and tapioca flour. A mixture of two or more of these flours may be used as the grain flour.

In addition to the grain flour, the puffed food may contain other raw materials, and other active ingredients or nutritional ingredients acceptable as food. The composition may also contain additives acceptable as food. Examples of the other raw materials include eggs, sugars, malt syrups, oils and fats, yeast (dry or fresh yeast), puffing agents, salt, nuts, dried fruits, fruit purees, vegetables, chocolate chips, cheese, red beans, and so forth. Examples of acceptable food additives include such additives as sweeteners, coloring agents, flavoring agents, preservatives, acidifiers, thickeners, and stabilizers.

<Production method of puffed food>

The puffed food of the present invention is produced by mixing raw materials to prepare a dough and then heating the resulting dough. If necessary, a fermentation step may be added before the heating step. The means for mixing the raw materials is not particularly limited, and known mixing apparatuses can be used. Examples of the means for heating the dough include baking using an oven, etc., steam heating using a steamer, etc., oil cooking, boiling, microwave heating, and so forth.

The stage of blending the cacao composition is not particularly limited so long as the properties of the composition used for the present invention are not significantly impaired. For example, it can be blended with other raw materials at an early stage of the production.

The puffed food can be labeled with an indication that it contains cacao beans processed product, that it contains a large amount of cacao beans processed product, that it contains polyphenols, that it contains a large amount of polyphenols, or effects that can be expected from polyphenols, and labeled with an indication that the intake of the food is recommended for a specific target. The indication can be a direct or indirect indication. Examples of the direct indication include indications on tangible objects such as the product itself, package, container, label, tag of the product, etc. Examples of the indirect indication include advertisement or publicity on such places or by such means as websites, storefronts, pamphlets, exhibitions, books, newspapers, magazines, television, radio, mails, e-mails, and voices.

Hereafter, the present invention will be more specifically explained with reference to the following examples.

Examples

<Preparation of composition containing undisrupted cacao bean cells (cacao composition)>

A composition (in the form of powder) containing undisrupted cacao bean cells was prepared by the following method using cacao beans obtained by removing pulp of cacao beans with pulp extracted from cacao pods as a raw material.

Softening step (heating step)

(1) Water in a weight corresponding to 5 times of the weight of the raw material cacao beans was put into a pot, and boiled.
(2) The raw material cacao beans were added to the boiling water prepared in (1), and boiled for 1 hour.
(3) The cacao beans were dumped into a colander to remove the water.

Shell peeling step

Shells were removed from the cacao beans by hand.

Grinding step (straining step)

The beans were strained through a sieve (32 mesh).

Powdering step

(1) The ground material obtained by the grinding step was dried in a vacuum dryer (drying conditions: 98°C, 2 hours) to prepare a powdered cacao bean ground material having a moisture content of 3% or lower.
(2) The powdered cacao bean ground product was further powdered by passing it through a 32 Me sieve again.

The composition containing undisrupted cacao bean cells was used in the following examples.

<Measurement of cacao polyphenol content>

The polyphenol content in the blended raw materials was measured according to "Method for measuring polyphenol content" described below. The procyanidin content in the blended raw materials was measured according to "Method for measuring procyanidin content" described below.

As for the polyphenol content in puffed food, measurement was performed according to "Method for measuring polyphenol content" described below for a sample of puffed food subjected to the following pretreatment to obtain a measured value A, measurement was performed in the same manner for a control puffed food prepared by replacing the polyphenol-containing material with wheat flour to obtain a measured value B, and the polyphenol content in the puffed food was obtained with the values in accordance with the following equation.

Polyphenol content in puffed food (mg/g) = Measured value A (mg/g) - Measured value B (mg/g)

As for the procyanidin content in puffed food, measurement was performed according to "Method for measuring procyanidin content" described below for a sample of the puffed food subjected to the following pretreatment to obtain a measured value A, measurement was performed in the same manner for a control puffed food prepared by replacing the polyphenol-containing material with wheat flour to obtain a measured value B, and the procyanidin content in the puffed food was obtained with the values in accordance with the following equation.

$$\text{Procyanidin content in puffed food (mg/g)} = \text{Measured value A (mg/g)} - \text{Measured value B (mg/g)}$$

Pretreatment

(1) Each sample in an amount of 1 g and 1 ml of warm water (37 to 40°C) were placed in a centrifuge tube and mixed by vortexing for 2 minutes. To Artificial gastric juice (prepared by mixing 100 ml of Disintegration test solution 1, pH 1.2 (Fujifilm Wako Pure Chemicals Co., Ltd.) with 107 mg of pepsin (Fujifilm Wako Pure Chemicals Co., Ltd.)), which had been warmed to 37°C, was added in a volume of 15 ml, and the mixture was shaken at 37°C and 100 rpm for 60 minutes.
(2) 2N $NaHCO_3$ was added in a volume of 2 mL for neutralization.
(3) Artificial intestinal juice (prepared by mixing 100 ml of Disintegration test solution 2, pH 6.8 (Fujifilm Wako Pure Chemicals Co., Ltd.) with 0.5 g of pancreatin (Fujifilm Wako Pure Chemicals Co., Ltd.)) was added in a volume of 20 ml, and the mixture was shaken at 37°C and 100 rpm for 120 minutes.
(4) After heating at 95°C for 10 minutes, the reaction mixture was cooled on ice, and the enzyme was inactivated.
(5) The reaction mixture was taken in a volume of 2 ml, acidified by addition of 0.2 ml of 2N citric acid, and used as a sample for the analysis.

Method for measuring polyphenol content

The polyphenol content was measured by the Folin-Ciocalteu method, and calculated as the (-)-epicatechin equivalent amount. Specifically, it was measured and calculated by the method described in "Cacao Polyphenol Measurement Method" attached to the "Labeling Standards for Cacao Polyphenols in Chocolates" of the Japan National Chocolate Industry Fair Trade Council.

Method for measuring procyanidin content

Procyanidins were quantified by HPLC. Specifically, Deverosil -ODS-HG5 (4.6 mm x 250 mm, $\varphi$ 5 $\mu$, Nomura Chemical Co.) was used as the column. The eluent consisted of solution A and solution B, wherein the solution A was 0.1% trifluoroacetic acid aqueous solution, and the solution B was 0.1% trifluoroacetic acid/acetonitrile solution. The flow rate of the eluent passed through the column was 0.8 ml/minute, and the gradient conditions were as follows: the ratio of the solution B to the total eluent was 10% at the start, 10% after 5 minute from the start, 25% after 35 minutes from the start, 100% after 40 minutes from the start, and 100% after 45 minutes from the start. The sample injection volume was 10 $\mu$L. Epicatechin was used as a standard, and the amount of each ingredient was calculated as the epicatechin equivalent amount. Ingredients: catechin, epicatechin, procyanidin B2, procyanidin B5, procyanidin C1, and cinnamtannin A2.

<Production of puffed food containing composition containing undisrupted cacao bean cells (cacao composition)>

1. Comparison of puffed foods (breads) made by blending raw materials so that the foods should have the same polyphenol contents (theoretical values)

(Composition)

Breads were produced according to the compositions shown in the table mentioned below.

[Table 1]

| Raw material | Mixing ratio (%) | | | |
|---|---|---|---|---|
| | A | B | C | D |
| Material containing polyphenols | 11.5 | 18.8 | 12.6 | 13.9 |
| Strong flour (Camellia, Nisshin Flour Milling Inc.) | 41.2 | 34.6 | 40.2 | 39.0 |
| Thin flour (Flower, Nisshin Flour Milling Inc.) | 4.6 | 3.8 | 4.5 | 4.3 |
| Salt | 0.9 | 0.9 | 0.9 | 0.9 |
| Dry yeast (Saf-Instant Yeast Red, LESAFFRE) | 0.3 | 0.3 | 0.3 | 0.3 |
| Water | 41.5 | 41.6 | 41.5 | 41.6 |
| Total | 100.0 | 100.0 | 100.0 | 100.0 |

Polyphenol-containing materials used in respective test groups
A (example): Composition containing powdered undisrupted cacao bean cells (polyphenol content 55 mg/g)
B (comparative example): Cocoa powder (oil content 22%, with alkalization, polyphenol content 35 mg/g)
C (comparative example): Cocoa powder (oil content 12%, no alkalization, polyphenol content 52 mg/g)
D (comparative example): Cocoa powder (oil content 22%, no alkalization, polyphenol content 45 mg/g)

(Production method)

Breads were prepared by using a home bakery, Panasonic SD-MT2, under the conditions of the menu No. 10 (for French bread, steps of kneading, rising, kneading, proving (fermentation), and baking are included, the required cooking time is about 5 hours). The total amount of the raw materials was 500 g.

(Results)

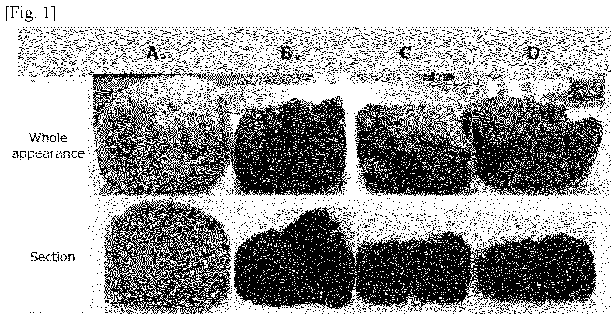

The results are shown in the table mentioned below and Fig. 1.

[Table 2]

| Polyphenol content in breads | | | | |
|---|---|---|---|---|
| | Content (mg/g) | | | |
| | A | B | C | D |
| Polyphenol content | 5.5 | 2.1 | 4.7 | 4.1 |

As seen from the results mentioned above, by blending cacao polyphenols as a composition containing undisrupted cacao bean cells, a bread having a high cacao polyphenol content (0.55% or higher as polyphenol content obtained after the treatment simulating digestion in the human body), maintaining good puffing, and having less bitterness and good flavor could be obtained.

On the other hand, in the test groups B to D, where cocoa powders with different oil contents and polyphenol contents, which were subjected to or not subjected to alkalization, were used to blend the same levels of cacao polyphenols, puffing was suppressed, and a strong bitter taste was felt.

2. Comparison of puffed foods (breads) produced with the same mixing ratios of polyphenol-containing materials

(Composition)

[Table 3]

| Raw material | | Mixing ratio (%) |
|---|---|---|
| a | Strong flour | 46.11 |
| | Water | 29.58 |
| | Sugar | 3.17 |
| | Dry yeast | 0.84 |
| | Salt | 0.76 |
| b | Sample | 10.00 |
| | Water | 9.54 |
| Total | | 100.00 |

Polyphenol-containing materials used in the respective test groups (corresponding to "Sample" mentioned in the above table)
A (example): Composition containing powdered undisrupted cacao bean cells (polyphenol content 35 mg/g)
B (comparative example): Cocoa powder (oil content 22%, no alkalization, polyphenol content 40 mg/g)
C (comparative example): Cocoa powder (oil content 12%, no alkalization, polyphenol content 43 mg/g)
D (comparative example): Cacao extract powder (produced by the method of Japanese Patent No. 6268333, polyphenol content 165 mg/g)

Since the sample containing the material of D could not be made to have a shape when water mentioned as the raw material b in the composition table was added, it was prepared without adding water as the raw material b.

(Production method)

(1) The raw materials other than those of b were put in a bowl and mixed.
(2) The raw materials of b were added, and they were further kneaded.
(3) The resulting dough was fermented in a drier (temperature 38°C, humidity 80%) for 50 minutes.
(4) The dough was divided into 3 equal portions, stretched, rolled, and let sitting at room temperature for 15 minutes.
(5) The formed dough was placed in a bread pan (180 x 70 x 55 mm) and fermented in a drier (temperature 38°C, humidity 80%) for 60 minutes.
(6) The dough was heated in an oven preheated to 200°C for 21 minutes.

The puffed foods (breads) produced through the steps mentioned above were left to cool at room temperature (25°C) for 1 hour, and then used for various measurements, and sensory evaluation thereof was performed by 3 expert panelists.

(Measurement of hardness of puffed food (bread))

Hardness was measured by using a creep meter (Model No. RE2-33005C, Yamaden Co., Ltd.).

(Structural observation of puffed food (bread))

X-ray CT scan: The interior of the bread was observed by using NAOMi-CT (RF Co., Ltd.).

(Results)

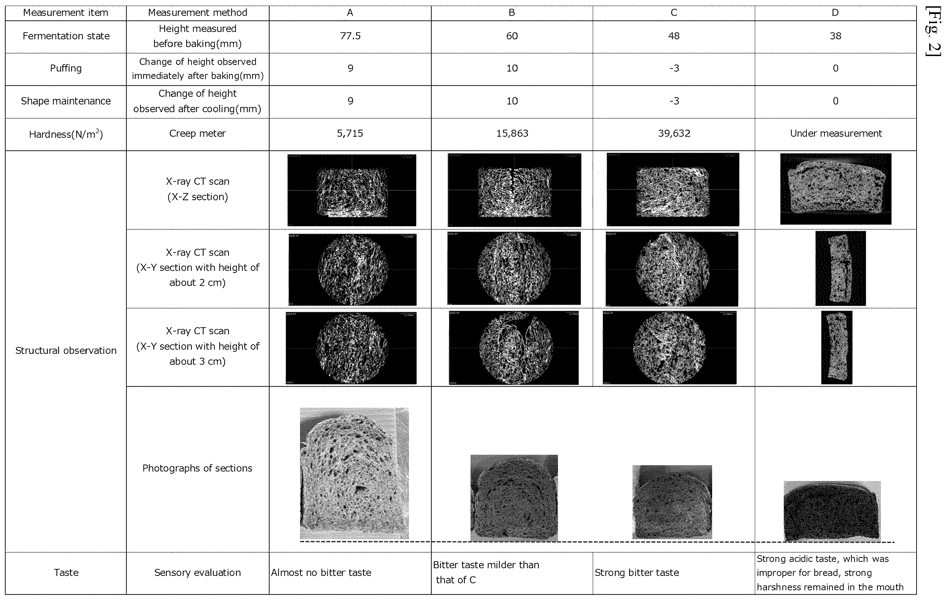

The results are shown in the table mentioned below and Fig. 2.

[Table 4]

| Polyphenol content in puffed food (bread) | |
| --- | --- |
| | Polyphenol content (mg/100 g) |
| A | 222.71 |
| B | 237.65 |
| C | 258.17 |
| D | 1261.42 |

The structural observation by X-ray CT scan showed that large bubbles dispersed in the puffed food (bread) of the present invention of the test group A. On the other hand, in the samples of the comparative examples of the test groups B to D, bubbles were small in size, and they had a dense structure.

As seen from the above results, by blending cacao polyphenols as a composition containing undisrupted cacao bean cells, a puffed food (bread) having a high cacao polyphenol content (0.2% or higher as polyphenol content obtained after treatment simulating digestion in the human body), maintaining favorable puffing, and having little bitterness and favorable flavor could be obtained.

3. Comparison of puffed foods (breads) containing polyphenol-contaning material at high content

(Composition)

[Table 5-1]

| Raw material | | Mixing ratio (%) |
| --- | --- | --- |
| a | Strong flour | 36.11 |
| | Water | 29.58 |
| | Sugar | 3.17 |
| | Dry yeast | 0.84 |
| | Salt | 0.76 |
| b | Sample | 20.00 |
| | Water | 9.54 |
| Total | | 100.00 |
| Polyphenol-containing materials used in the respective test groups (corresponding to "Sample" mentioned in the above table)<br>A (example): Composition containing powdered undisrupted cacao bean cells (polyphenol content 35 mg/g, procyanidin content 3.6 mg/g, free fat content 23.4% (based on weight of composition))<br>B (comparative example): Cocoa powder (oil content 12%, no alkalization, polyphenol content 52 mg/g, procyanidin content 4.8 mg/g) | | |

(Production method)

Breads were prepared by using a home bakery, National (currently Panasonic) SD-BT3. The materials of "a" mentioned in the table were put into a bread case, and materials of "b" were uniformly put around "a". Then, the case was set on the main unit, and white bread was produced through the baking course (consisting of kneading, rising, proving (fermentation), and baking steps, the required cooking time was about 4 hours). The total amount of the materials was 480 g.

The puffed foods (breads) produced through the above process were cooled at room temperature (25°C) for 1 hour, and then used for various measurements.

(Structural observation of puffed food (bread))

X-ray CT scan: The interior of the bread was observed by using NAOMi-CT (RF Co., Ltd.).

(Results)

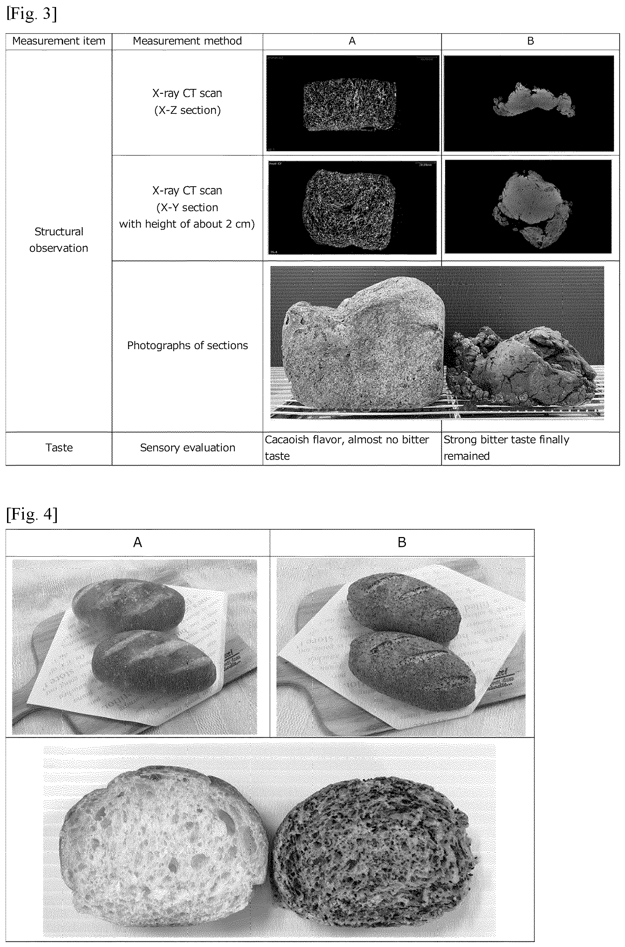

The results are shown in the table mentioned below and Fig. 3.

[Table 5-2]

| Polyphenol content and procyanidin content in puffed foods (breads) | | |
|---|---|---|
| | Content (mg/g) | |
| | A | B |
| Polyphenol | 3.71 | 5.11 |
| Procyanidin | 0.45 | 0.57 |

By using a composition containing powdered undisrupted cacao bean cells, a good puffed food (bread) containing the polyphenol-containing material at a high content, and having good cacao aroma and low bitterness could be obtained.

4. Production of soft French bread containing polyphenol-containing material at high content

(Composition)

[Table 6-1]

| Raw material | A (control) | B (containing sample) |
|---|---|---|
| French bread flour* | 40.51 | 35.93 |
| Strong flour | 17.36 | 15.40 |
| Polyphenol-containing material | 0.00 | 11.30 |
| Salt | 1.16 | 1.03 |
| Dry yeast | 0.29 | 0.26 |
| Malt syrup | 0.17 | 0.15 |
| Water | 40.51 | 35.93 |
| Total | 100.00 | 100.00 |
| Polyphenol content (mg/g) | - | 3.96 |
| Procyanidin content (mg/g) | - | 0.41 |
| * Terroir Pur (Nisshin Flour Milling Co., Ltd.) | | |

No polyphenol-containing material was used in A (control composition), and a composition containing powdered undisrupted cacao bean cells (polyphenol content 35 mg/g, procyanidin content 3.6 mg/g) was used in B. The polyphenol and procyanidin contents mentioned in the table are theoretical values.

(Production method)

(1) The materials were kneaded in a mixer for 3 minutes, the dough was autolysed (left sitting) for 20 minutes, and then further kneaded for 8 minutes.

(2) Fermentation was allowed at 26°C/70% for 90 minutes, the dough was punched (degassed), and fermentation was further allowed for 90 minutes.
(3) The dough was divided into portions of approximately 80 g each, and benched for 20 minutes.
(4) Fermentation was allowed at 30°C/70% for 70 minutes.
(5) The dough was formed into a sea cucumber shape, placed on a baking plate, and cut on the top.
(6) The dough was baked in an oven preheated at 230°C (top heat)/215°C (bottom heat) for 12 to 15 minutes.

(Flavor evaluation)

Flavors (bitterness and astringency) were evaluated by two experts according to the following criteria.

Bitter taste:

++: The same bitterness as that of the puffed food containing no cacao material.
+: Slightly stronger bitter taste is felt compared with the puffed food containing no cacao material, but it is not problematic.
-: Clearly bitter compared with the puffed food containing no cacao material.

Astringent taste:

++: Astringency is the same as that of the puffed food containing no cacao material.
+: Slightly stronger astringency is felt compared with the puffed food containing no cacao material, but it is not problematic.
-: Clearly astringent compared with the puffed food containing no cacao material.

For the both evaluation items, the evaluations of ++ and + can mean that the problem was solved.

(Results)

The results are shown in the following table and Fig. 4. It was confirmed by visual evaluation that the bread of (B) containing the polyphenol-containing material was well puffed as the bread (A) containing no polyphenol-containing material. Good puffing effect was obtained also in soft French bread even with high polyphenol content, and the flavor was also favorable.

[Table 6-2]

|  | A (control) | B (containing sample) |
|---|---|---|
| Bitterness | - | + |
| Astringency | - | + |

<Production and analysis of composition containing undisrupted cacao bean cells (cacao compositions)>

The following materials were prepared and produced.

(Cacao bean raw material A)

Cacao beans with pulp extracted from cacao pods were used as a raw material A in the following examples.

(Cacao bean raw material B)

Pulp of cacao beans with pulp extracted from cacao pods was removed, and the beans were then dried and used as a raw material B in the following examples.

(Comparative Example)

Cacao mass was produced as a conventional cacao bean processed product through conventional fermentation, drying, roasting and grinding steps. This cacao mass was processed in a conventional hydraulic press to prepare cocoa powder having an oil content of 12% or 22%.

(Cacao composition)

The raw material A or B was subjected to a heating treatment step, shell peeling step, and grinding (straining) step to obtain cacao bean processed products A1 (using the raw material A, strained through 32 mesh), A2 (using the raw material A, strained through 32 mesh and 60 mesh), B1 (using the raw material B, strained through 32 mesh), and B2 (using the raw material B, strained through 32 mesh and 60 mesh).
The steps were carried out as follows.

(Heating treatment step)

(1) Water in a weight corresponding to 5 times of the weight of the raw material cacao beans was put into a pot, and boiled.
(2) The raw material cacao beans were added to the boiling water prepared in (1), and the raw material cacao beans were boiled for 30 minutes in the case of the raw material A, or 1 hour in the case of the raw material B.
(3) The cacao beans were dumped into a colander to remove the water.

It was found that, as for the volume of water used for the boiling, 5 and 20 times weights of water gives no difference in the remaining ratio of polyphenols, but the boiling time affects the remaining ratio of polyphenols.

(Shell peeling step)

Shells were removed from the cacao beans by hand.

(Grinding step (straining step))

(1) The beans were strained through a sieve (32 mesh, mesh opening was 500 $\mu$m).
(2) If necessary, the product of (1) was further strained through another sieve (60 mesh, mesh opening was 250 $\mu$m).

(Measurement of polyphenol content)

The polyphenol content was measured by the Folin-Ciocalteu method described above.
In the case of using the raw material A, the polyphenol remaining ratio was calculated based on the total polyphenol content of the raw beans extracted from the cacao pods, which was taken as 100%. In the case of using the raw material B, it was calculated based on the total polyphenol content of cacao beans obtained by removing pulp from cacao beans with pulp extracted from cacao pods and drying the cacao beans, which was taken as 100%.

(Measurement of procyanidins)

Procyanidins were quantified by HPLC as described above.
In the case of using the raw material A, the procyanidin remaining ratio was calculated based on the procyanidin content of the raw beans extracted from the cacao pods, which was taken as 100%. In the case of using the raw material B, it was calculated based on the procyanidin content of cacao beans obtained by removing pulp of cacao beans with pulp extracted from cacao pods and drying the beans, which was taken as 100%.

(Measurement of free fat)

Free fat was measured by the following method.

(1) About 5 g of a sample (a) was put into a 50-ml centrifuge tube.

(2) n-Hexane was added in a volume of 25 ml.

(3) The tube was shaken 130 times/minute for 3 minutes with an amplitude of 4 cm.

(4) The mixture was centrifuged at 3000 rpm and 4°C for 10 minutes.

(5) The weight (b) of a 100-ml conical flask was measured.

(6) The supernatant obtained in (4) mentioned above was transferred onto filter paper, and filtered, and the filtrate was collected in the 100-ml conical flask.

(7) n-Hexane was evaporated by blowing nitrogen gas.

(8) n-Hexane was evaporated by holding the residue in a vacuum constant temperature dryer at 98°C for 4 hours under reduced pressure.

(9) The weight (c) of the conical flask was measured after air-cooling in a desiccator.

$$\text{Free fat content based on sample weight (\%)} = (c - b)/a \times 100$$

$$\text{Free fat content based on oil content (\%)} = <x>/\text{oil in a} \times 100$$

$$\text{Free fat content based on solid content (\%)} = <x>/(a - \text{moisture in a}) \times 100$$

(Comparative observation for oil seepage)

Approximately 2 g of the 60-mesh strained cacao beans obtained from the raw material A (cacao beans processed product A2), cacao mass, and melted commercial milk chocolate were each weighed in a microtube, centrifuged (16,000 rpm for 10 minutes), and separation of oil from each material was visually observed.

(Structure observation)

Observation was performed with a microscope by the following procedure.

(1) A sample was placed on slide glass.

(2) n-Hexane was dropped.

(3) A methylene blue solution was dropped.

(4) An iodine solution was dropped.

(5) The sample was observed with a microscope.

Observation was also performed with a confocal microscope by the following procedure.

(1) A sample was placed on slide glass.

(2) A Nile Mix staining solution was dropped.

(3) Cover glass was placed.

(4) The sample was observed with a confocal microscope.

Nile Mix Staining Solution: 2% Ultrapure water was added to 1,2-propanediol, and they were mixed to prepare a solvent. Nile Red (0.02 g) and Nile Blue A (0.01 g) were added to the above solvent, the volume of the mixture was adjusted to 1 L, and the mixture was stirred for 1 hour or longer.

(Measurement of undisrupted cell ratio)

The ratio of undisrupted cells was measured and calculated by the following procedure.

(1) A measurement sample (0.03 g) was put into a conical tube, 2 ml of ultrapure water was added, the mixture was stirred, 0.5 ml of a 0.01% methylene blue solution (methylene blue trihydrate (molecular formula, $C_{16}H_{18}N_3SCl \cdot 3H_2O$; molecular weight, 373.90) was dissolved and diluted in ultrapure water to prepare 0.01% (w/v) methylene blue solution) was further added, the mixture was stirred, then the resulting solution was dropped onto slide glass, cover glass was placed thereon, and the sample was observed with a microscope (magnification, 450 x).

(2) From the image, the following "regional area (A)" and "number of disrupted cells (B)" were obtained by using the image analysis software "ImageJ" (free software, available for download from URL: https://imagej.net/Welcome, version 1.50).

Regional area (A): After the image was made binary, it was analyzed as "Area" by using the "Analyze" function. The hollow parts formed by difference in light at the time of binarization were filled with "Fill holes" for the analysis.
Number of disrupted cells (B): Disrupted cells were visually selected from the image, and manually counted by using the "Cell Counter" function.

(3) The area of one undisrupted cell (C) was calculated as an approximate value by assuming the cell to be a circle with a radius of 10 $\mu$m (10 x 10x 3.14 = 314 $\mu$m$^2$).
(4) The regional area (A) was divided by the area of one undisrupted cell (C) to obtain the total cell count (D).

The ratio of undisrupted cells in cacao bean cells (%) was calculated in accordance with the following equation. Values were calculated for 5 or more of regions where the total number of cells (D) was in the range of 100 to 300, and an mean value was obtained.

$$\text{Ratio of undisrupted cells in cacao bean cells } (\%) = (D - B)/D \times 100$$

(Particle size distribution)

The particle size distribution was measured with a particle size analyzer (laser diffraction type particle size distribution analyzer SALD-220 0 (Shimadzu Corporation)). The vertical axis of the distribution spectrum represents the relative amount of particles in terms of %, which indicates the ratio of the volume distribution of each particle size to the total volume, and the horizontal axis represents the particle size in terms of $\mu$m.

(Moisture content)

The moisture content was measured by the method described on the Web page of the Consumer Affairs Agency of Japan, "Appendix: Food Labeling" (http://www.caa.go.jp/policies/policy/food_labeling/food_labeling_act/pdf/foods_index _18_180119_0003.pdf), "Appendix: Analysis Methods and Others of Nutritional Ingredients etc.", 5. Carbohydrates, a. Moisture, (3) Vacuum heating and drying method.

(Oil content)

The oil content was measured by the method described on the Web page of the Consumer Affairs Agency of Japan, "Appendix: Food Labeling (http://www.caa.go.jp/policies/policy/food_labeling/food_labeling_act/pdf/foods_index _18_180119_0003.pdf), "Appendix: Analysis Methods and Others of Nutritional Ingredients etc.", 2. Lipids, (1) Ether extraction method.

(Results)

The measurement results are shown in the following table.

[Table 7]

| Test group | Moisture | Oil content | Free fat (in sample) | Free fat (based on solid content) | Free fat (based on oil content) | Polyphenol remaining ratio (based on solid content) | Procyanidin remaining ratio (based on solid content) |
|---|---|---|---|---|---|---|---|
| | % | % | % | % | % | % | % |
| Cacao beans processed product A1 (32 mesh strained) | | | | | | 93-98 | - |

(continued)

| Test group | Moisture | Oil content | Free fat (in sample) | Free fat (based on solid content) | Free fat (based on oil content) | Polyphenol remaining ratio (based on solid content) | Procyanidin remaining ratio (based on solid content) |
|---|---|---|---|---|---|---|---|
| | % | % | % | % | % | % | % |
| Cacao bean processed product A2 (60 mesh strained) | 51.8 | (26) | 1.7 | 3.5 | 6.5 | 93-98 | 77-91 |
| Cacao bean processed product B1 (32 mesh strained) | 39.8 | (33) | 6.0 | 10.0 | 18.2 | 79-82 | - |
| Cacao bean processed product B2 (60 mesh strained) | 38.5 | (34) | 9.4 | 15.3 | 27.6 | 79-82 | - |
| Comparative Example: Cacao mass | 3.3-4.0 | (55) | 41.2-44.3 | 42.6-46.1 | 74.9-80.5 | 40-68 | 16-21 |
| Comparative example: Cocoa powder (oil content 12%) | 3.9 | (12) | 8.4 | 8.7 | 70.0 | | - |
| Comparative example: Cocoa powder (oil content 22%) | 3.8 | (22) | 17.1 | 17.8 | 77.7 | | - |

Whereas the cacao mass and cocoa powder, which are conventional cacao bean processed products, had a free fat ratio higher than 70% based on the oil content, the cacao compositions (referring to cacao bean processed products A1 to B2 mentioned in the table) had an extremely lower free fat ratio lower than 30%.

In addition, whereas the remaining ratio of polyphenols in the cacao mass, which is a conventional cacao bean processed product, was 40 to 51%, it was higher than 70% in the cacao compositions. Thus, the cacao compositions had extremely higher remaining ratios compared with the materials obtainable by the conventional processing method. In addition, whereas the remaining ratio of procyanidins was 16 to 21% in the cacao mass, which is a conventional cacao bean processed product, it was higher than 70% in the cacao composition. Thus, the cacao composition had extremely higher procyanidin remaining ratio compared with the material obtainable by the conventional processing method.

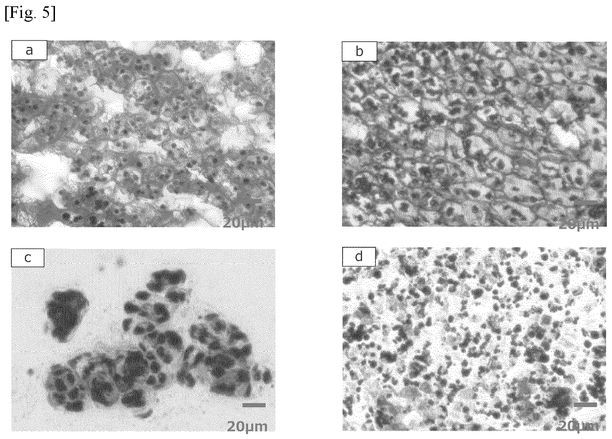

By the microscopic observation, in the cacao beans after the heating treatment, it could be confirmed that the cell membranes remained, and the presence of starch grains that had expanded with water contained in the inside of the cells could be confirmed (Fig. 5b). Also in the cacao compositions ground after the heating treatment, the cell membranes remained, and the ingredients in the inside of the cells were retained (Fig. 5c). On the other hand, in the cacao mass, the cell membranes were disrupted, and the ingredients that had been contained in the inside of the cells were released (Fig. 5d).

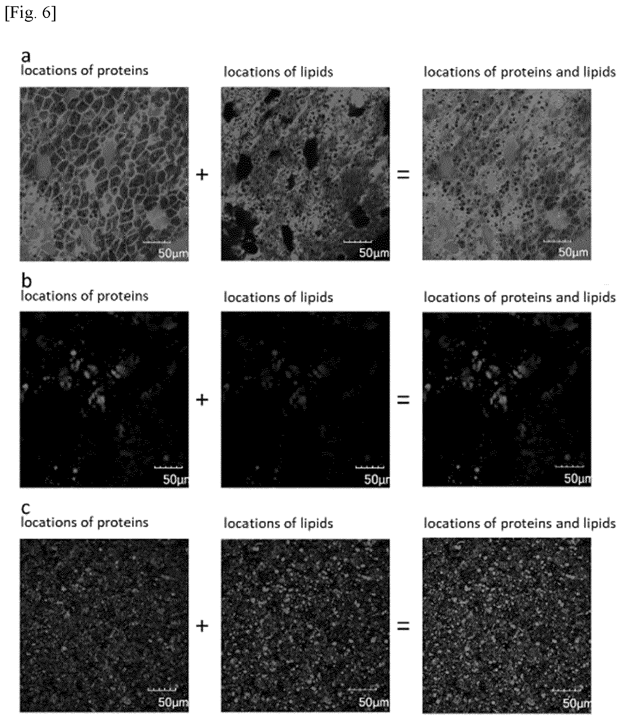

By the confocal microscopic observation, presence of lipids in the cells could be confirmed for the unprocessed cacao beans, and in the cacao compositions, it could be confirmed that the locations of proteins and lipids were the same, thus the cells were not disrupted, and the lipids remained in the cells. On the other hand, in the cacao mass, the locations of proteins and lipids were different (Fig. 6c), therefore the cells were disrupted, and the lipids and proteins that had existed in the cells were released.

The results of the calculation of the ratios of undisrupted cells (undisrupted cell ratio) are shown in the following table.

[Table 8]

| Region No. | 3 | 4 | 5 | 6 | 9 | 10 | 12 |
|---|---|---|---|---|---|---|---|
| Area (gm$^2$) | 61810.707 | 83222.869 | 77067.879 | 71996.571 | 89213.617 | 83472.037 | 36307.900 |
| Total cell count (cells) | 197 | 265 | 245 | 229 | 284 | 266 | 116 |
| Disrupted cell count (cells) | 67 | 57 | 48 | 51 | 66 | 65 | 37 |
| Disrupted cell ratio (%) | 34.04 | 21.51 | 19.56 | 22.24 | 23.23 | 24.45 | 32.00 |
| Undisrupted cell ratio (%) | 65.96 | 78.49 | 80.44 | 77.76 | 76.77 | 75.55 | 68.00 |

The ratio of undisrupted cacao bean cells in the cacao bean cells of the cacao bean processed product B2 was calculated to be 74.7% in average on the basis of the results shown in the table mentioned above.

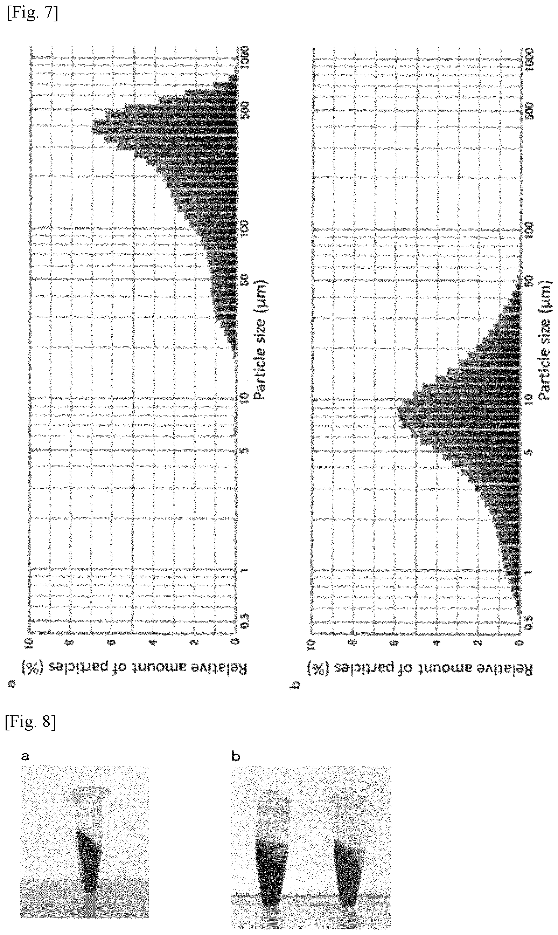

As for the particle size distribution, whereas the cacao mass had a peak in the range of 5 to 10 $\mu$m of the particle diameter (Fig. 7b), the cacao composition (cacao bean processed product A2, 60 mesh strained) had a large particle size of about 20 $\mu$m or larger, unlike the cacao mass (Fig. 7a). In Fig. 7a, 100% of the particles were in the range of 10 $\mu$m to 1.5 mm, indicating that the particle size distribution of the cacao bean processed product A2 was within the range of 10 $\mu$m to 1.5 mm.

The median diameter of the cacao composition (Fig. 7a) was 318.8 $\mu$m, the mode diameter of the same was 391.7 $\mu$m, and the mean diameter of the same was 269.9 $\mu$m. The median diameter of the cacao mass (Fig. 7b) was 7.4 $\mu$m, the mode diameter of the same was 7.5 $\mu$m, and the mean diameter of the same was 6.8 $\mu$m.

Further, as for oil seepage, separated oil was observed for the cacao mass and melted commercial milk chocolate, but no oil separation was observed in the cacao bean processed product A2 (Fig. 8).

<Measurement of breaking strength

The breaking strength of heated cacao beans was measured.

<Materials and methods>

The production procedures of the samples A to D are shown below.

A: Unfermented dried cacao beans

Unfermented beans (dried beans) were dried in a vacuum dryer at 100°C for 4 hours.

B: Unfermented roasted cacao beans

(1) Unfermented beans (dried beans) were roasted in a roaster at 126°C for 40 minutes.
(2) The beans were dried in a vacuum dryer at 100°C for 4 hours.

C: Unfermented boiled (1 hour) and dried cacao beans

(1) Unfermented beans (dried beans) were boiled in boiling water for 1 hour.
(2) The beans were dried in a vacuum dryer at 100°C for 4 hours.

D: Unfermented boiled (2 hours) and dried cacao beans

(1) Unfermented beans (dried beans) were boiled in boiling water for 2 hours.
(2) The beans were dried in a vacuum dryer at 100°C for 4 hours.

The breaking strength was measured under the following conditions.

Equipment used: FUDOH rheometer RTC-3010D-CW
S. ADJ (penetration depth): 4.0 mm
T. SPEED (penetration speed): 2 cm/minute
Plunger: Cylindrical shape having a diameter of 3 mm
Measurement method: Measurement was performed by placing each sample (whole cacao beans) at the center of the stand at a sample temperature of 22 to 24°C.

(Results)

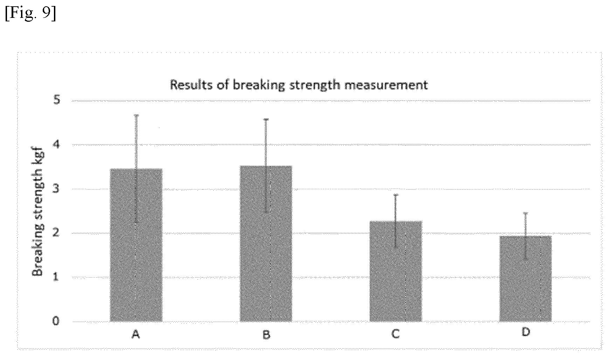

The results are shown in the following table, and Fig. 9.

[Table 9]

| | | | n= 50 |
| --- | --- | --- | --- |
| | Moisture content % | Average kgf | Standard deviation kgf |
| A. Dried non-heated cacao beans | 3.3 | 3.46 | 1.21 |
| B. Hot air-roasted cacao beans | 2.2 | 3.54 | 1.05 |
| C. Boiling-heated (1 hour) cacao beans | 2.8 | 2.28 | 0.59 |
| D. Boiling-heated (2 hours) cacao beans | 1.8 | 1.94 | 0.52 |

The breaking strength of cacao beans was markedly reduced by heating by boiling. The breaking strength was also reduced by increasing the boiling time.

Industrial Applicability

When puffed grain flour foods containing high content of polyphenols are produced, if conventional polyphenol-containing materials (cacao mass, cocoa powder, etc.) are blended as the raw material, it is difficult to achieve favorable appearance and flavors. However, the present invention makes it possible to produce polyphenol-rich puffed grain flour foods with favorable appearance and flavor.

**Claims**

1. A puffed grain flour food containing any of the following cacao compositions (a) to (d):

(a) a cacao composition having a particle size distribution in the range of 10 $\mu$m to 1.5 mm and containing undisrupted cacao bean cells,
(b) a cacao composition having a free fat content of 60% by weight or lower based on oil content,
(c) a cacao composition containing 30% or more of undisrupted cacao bean cells in cacao bean cells, and
(d) a cacao composition containing undisrupted cacao bean cells, which has a breaking strength of 3 kgf or lower.

2. The food according to claim 1, which has a polyphenol content of 0.01% by weight or higher.

3. The food according to claim 1 or 2, which has a polyphenol content of 0.2% by weight or higher.

4. The food according to any one of claims 1 to 3, which has a procyanidin content of 0.02% by weight or higher.

5. The food according to any one of claims 1 to 4, wherein mixing amount of the cacao composition in raw materials is 1 to 30% by weight.

6. The food according to any one of claims 1 to 5, which contains at least one of yeast and a puffing agent.

7. The food according to any one of claims 1 to 6, which is a bread product.

[Fig. 1]

[Fig. 2]

| Measurement item | Measurement method | A | B | C | D |
|---|---|---|---|---|---|
| Fermentation state | Height measured before baking(mm) | 77.5 | 60 | 48 | 38 |
| Puffing | Change of height observed immediately after baking(mm) | 9 | 10 | -3 | 0 |
| Shape maintenance | Change of height observed after cooling(mm) | 9 | 10 | -3 | 0 |
| Hardness(N/m²) | Creep meter | 5,715 | 15,863 | 39,632 | Under measurement |
| Structural observation | X-ray CT scan (X-Z section) | | | | |
| | X-ray CT scan (X-Y section with height of about 2 cm) | | | | |
| | X-ray CT scan (X-Y section with height of about 3 cm) | | | | |
| | Photographs of sections | | | | |
| Taste | Sensory evaluation | Almost no bitter taste | Bitter taste milder than that of C | Strong bitter taste | Strong acidic taste, which was improper for bread, strong harshness remained in the mouth |

[Fig. 3]

| Measurement item | Measurement method | A | B |
|---|---|---|---|
| Structural observation | X-ray CT scan (X-Z section) | | |
| | X-ray CT scan (X-Y section with height of about 2 cm) | | |
| | Photographs of sections | | |
| Taste | Sensory evaluation | Cacaoish flavor, almost no bitter taste | Strong bitter taste finally remained |

[Fig. 4]

| A | B |
|---|---|
| | |
| | |

[Fig. 5]

[Fig. 6]

[Fig. 7]

[Fig. 8]

[Fig. 9]

Results of breaking strength measurement

## INTERNATIONAL SEARCH REPORT

| | |
|---|---|
| International application No. | |
| | **PCT/JP2022/017292** |

| | |
|---|---|
| **A.** | **CLASSIFICATION OF SUBJECT MATTER** |

*A21D 6/00*(2006.01)i; *A21D 13/06*(2017.01)i; *A21D 2/36*(2006.01)i; *A23G 1/30*(2006.01)i
FI: A21D2/36; A21D6/00; A21D13/06; A23G1/30

According to International Patent Classification (IPC) or to both national classification and IPC

| | |
|---|---|
| **B.** | **FIELDS SEARCHED** |

Minimum documentation searched (classification system followed by classification symbols)

A21D6/00; A21D13/06; A21D2/36; A23G1/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | まくのうち. カカオニブ×チョコチツプのクツキー. クツクパツド. [online], 03 March 2009, Internet: <URL: https://cookpad.com/recipe/746737> [retrieved on 09 June 2022], non-official translation (MAKUNOUCHI. Cacao Nib and Chocolate Chip Cookies. Cookpad.) ingredients, how to make | 1-6 |
| X | アリゾナの奇跡. ピーカンナッツとカカオニブのビスコッティ. クツクパツド. [online], 11 November 2020, Internet: <URL: https://cookpad.com/recipe/6522339> [retrieved on 10 June 2022], non-official translation (ARIZONA MIRACLE. Pecan and Cacao Nib Biscotti. Cookpad.) ingredients, how to make | 1-6 |
| X | 実仔c. オイル卵乳チョコ無し！ ブラウニー. クツクパツド. [online], 19 February 2014, Internet: <URL: https://cookpad.com/recipe/2503239> [retrieved on 13 June 2022], non-official translation (JIKKO C. No-Oil, No-Egg, No-Chocolate Brownie! Cookpad.) ingredients, how to make | 1-7 |

✓ Further documents are listed in the continuation of Box C.    ✓ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 June 2022** | **28 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/017292** |

**C.    DOCUMENTS CONSIDERED TO BE RELEVANT**

| Category* | Citation of document, with indication, where appropriate, of the relevant passages | Relevant to claim No. |
| --- | --- | --- |
| X | まくのうち. 黒ホツピーパン. クツクパツド. [online], 26 August 2010, Internet: <URL: https://cookpad.com/recipe/1211612> [retrieved on 13 June 2022], non-official translation (MAKUNOUCHI. Black Hoppy Bread. Cookpad.) <br> ingredients, how to make | 1-7 |
| X | WO 2000/16640 A1 (MEIJI SEIKA KAISHA, LTD.) 30 March 2000 (2000-03-30) <br> claims 1-5, examples | 1-7 |
| A | US 2009/0041894 A1 (WILLIAM BRADBURY, Allan George et al.) 12 February 2009 (2009-02-12) | 1-7 |
| A | JP 2008-500380 A (NATRACEUTICAL, S. A.) 10 January 2008 (2008-01-10) | 1-7 |
| A | JP 7-016059 A (EZAKI GLICO CO., LTD.) 20 January 1995 (1995-01-20) | 1-7 |
| A | JP 58-000851 A (KANEBO SHOKUHIN KK) 06 January 1983 (1983-01-06) | 1-7 |
| P, X | WO 2021/066119 A1 (MEIJI CO., LTD.) 08 April 2021 (2021-04-08) <br> claims, paragraph [0060], examples | 1-7 |

Form PCT/ISA/210 (second sheet) (January 2015)

**INTERNATIONAL SEARCH REPORT**
Information on patent family members

International application No.

**PCT/JP2022/017292**

| Patent document cited in search report | | | Publication date (day/month/year) | Patent family member(s) | | | Publication date (day/month/year) |
|---|---|---|---|---|---|---|---|
| WO | 2000/16640 | A1 | 30 March 2000 | (Family: none) | | | |
| US | 2009/0041894 | A1 | 12 February 2009 | EP | 2005835 | A1 | |
| JP | 2008-500380 | A | 10 January 2008 | US | 2007/0077318 | A1 | |
| | | | | US | 2008/0193629 | A1 | |
| | | | | WO | 2005/115160 | A1 | |
| | | | | EP | 1748700 | A1 | |
| | | | | EP | 1927288 | A1 | |
| JP | 7-016059 | A | 20 January 1995 | US | 5395635 | A | |
| | | | | EP | 614613 | A1 | |
| JP | 58-000851 | A | 06 January 1983 | (Family: none) | | | |
| WO | 2021/066119 | A1 | 08 April 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008200032 A
- JP 2010041965 A
- JP HEI09234018 A
- JP HEI11308978 A
- WO 2003077668 A
- JP 2005520505 A
- US 20070184167 A1
- JP SHO48068777 A
- JP HEI10033119 A
- US 8048469 B
- WO 2021066119 A
- JP 2020037486 W
- JP 6268333 B

**Non-patent literature cited in the description**

- *Japanese Society of Home Economics,* 1999, vol. 50 (4), 323-332